# EUROPEAN PATENT SPECIFICATION

(11) **EP 2 709 243 B1**
(45) Date of publication and mention of the grant of the patent: **22.11.2017**
(21) Application number: 12184603.4
(22) Date of filing: 17.09.2012
(51) Int. Cl.: H02K 5/04, H02K 15/00, H02K 15/14, B65D 88/00

(54) **Casing of an electric generator and method for transporting a casing of an electric generator**
Generatorgehäuse, Verfahren zum Transport eines Generatorgehäuses
Boîtier d'un générateur électrique et procédé de transport d'un boîtier d'un générateur électrique

(43) Date of publication of application: 19.03.2014
(73) Proprietor: General Electric Technology GmbH, 5400 Baden (CH)
(72) Inventor: Bänziger, Matthias, 5707 Seengen (CH); Hediger, Daniel, 5504 Othmarsingen (CH)
(74) Representative: General Electric Technology GmbH

(56) References cited:
- EP-A1- 2 272 775
- DE-A1-102008 063 783
- GB-A- 292 509
- US-A- 1 749 728
- US-A- 5 242 129

## Description

### TECHNICAL FIELD

The present disclosure relates to a casing and a method for transporting a casing of an electric generator.

### BACKGROUND

Large casings are often manufactured in manufacturing plants and are then transported on a yard; for example an electric machine or a gas or steam turbine or also a tank or reservoir, etc. are manufactured in a manufacturing plant and are then transported to the yard where they are assembled with other components.

EP 2272775 A1 describes a tank assembly of modular composite construction with a body comprising a side wall with end covers. A side wall is formed by a plurality of arcuate side wall segments interconnected by fasteners.

US 1749728 describes a split frame for electro-dynamic machines comprising a plurality of sectors having their ends spaced apart.

US5242129 describes a knockdown cable reel for storage of electrical cable including a central drum with radially extending flanges on each end. The flanges are formed from a plurality of segments to facilitate assembly and disassembly. Transport of the casings is often carried out by trains or trucks, this requires that the casings have dimensions that fit the streets, railways, tunnels and in general comply with the constraints of the transport means to be used.

GB 292 509 A, describes how to construct a stator of large capacity dynamo-electric machines in two or more sectors. The sectors are the stator core and foot members to support the stator.

Often these constrains are defined in each country and impose a limit to the allowed maximum width w of the casings (i.e. the size in the horizontal direction).

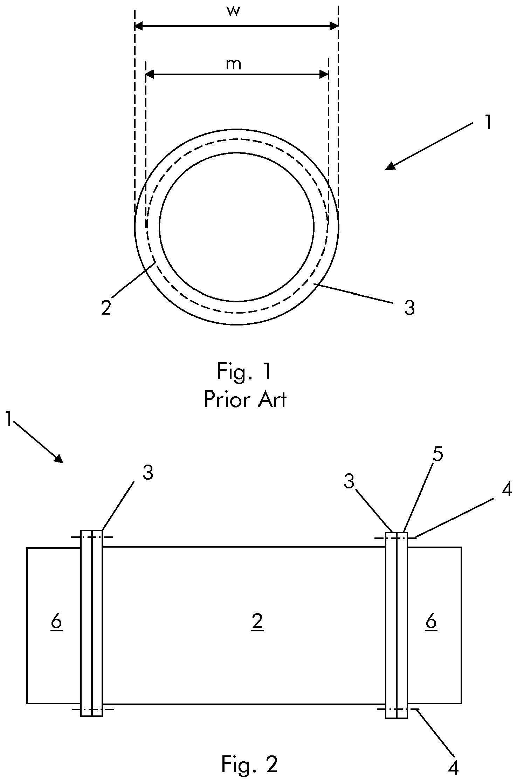

With reference to figure 1, casings 1 have a mantel 2 and flanges 3 that protrude from the mantel 2.

Since the flanges protrude to the outside of the mantel and since the allowed maximum size w (for example width) is fixed, the mantel size m (for example the mantel width) is smaller than the allowed maximum size w; in other words, the mantel width m is smaller than the allowed maximum width w because of the flange.

### SUMMARY

An aspect of the disclosure includes providing a casing of an electric generator having a mantel whose size is not limited by the flange.

Another aspect of the disclosure is to provide a method for transporting a casing of an electric generator whose flanges exceed the allowed maximum size.

These and further aspects are attained by providing a casing and a method in accordance with the accompanying claims.

### BRIEF DESCRIPTION OF THE DRAWINGS

Further characteristics and advantages will be more apparent from the description of a preferred but non-exclusive embodiment of the casing, illustrated by way of non-limiting example in the accompanying drawings, in which:
Figure 1 is a schematic view of a casing according to the prior art;
Figure 2 is a side view of a casing according to the disclosure;
Figure 3 is an exploded front view of the casing of figure 2;
Figure 4 is a front view of the casing of figure 2;
Figures 5 and 6 are cross sections through lines V-V and VI-VI of figure 3;

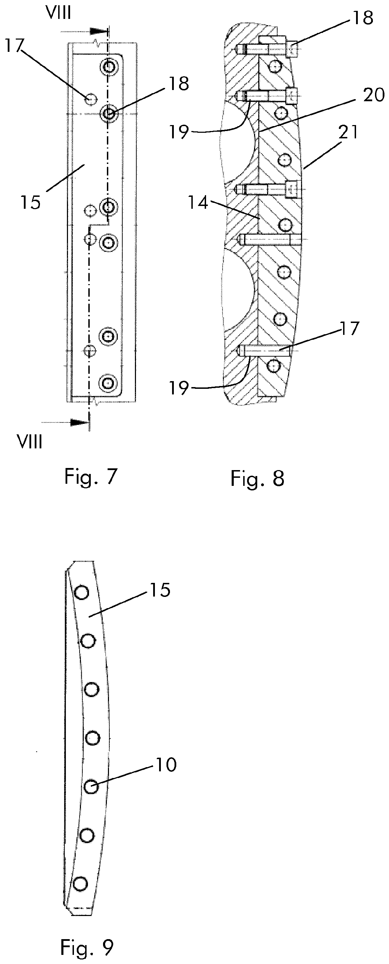

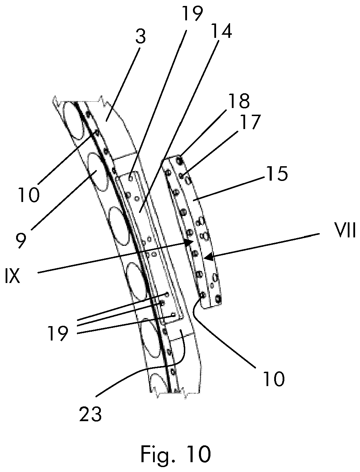

Figure 7 is a view according to line VII of figure 10 of the insert housed in the seat;
Figure 8 is a cross section through line VIII-VIII of figure 7;
Figure 9 is a view according to line IX of figure 10;
Figure 10 is a perspective view of the insert and a part of the flange.

### DETAILED DESCRIPTION OF EXEMPLARY EMBODIMENTS

The casing 1 of an electric generator, (for example a turbogenerator, i.e. a generator to be connected to a gas or steam turbine) has a mantel 2 and flanges 3. The flanges 3 are connected (for example via bolts 4) to corresponding flanges 5 of other parts of the casing 1; in the example of figure 1 the other parts are end casings 6.

The mantel 2 has a mantel size m over a given direction d. In a preferred example the given direction d is the direction of the width of the casing 1; in fact the width of the casing usually provides the most of the constrains when the casing 1 must be transported. It is anyhow clear that the given direction d can be any other direction, such as the height h.

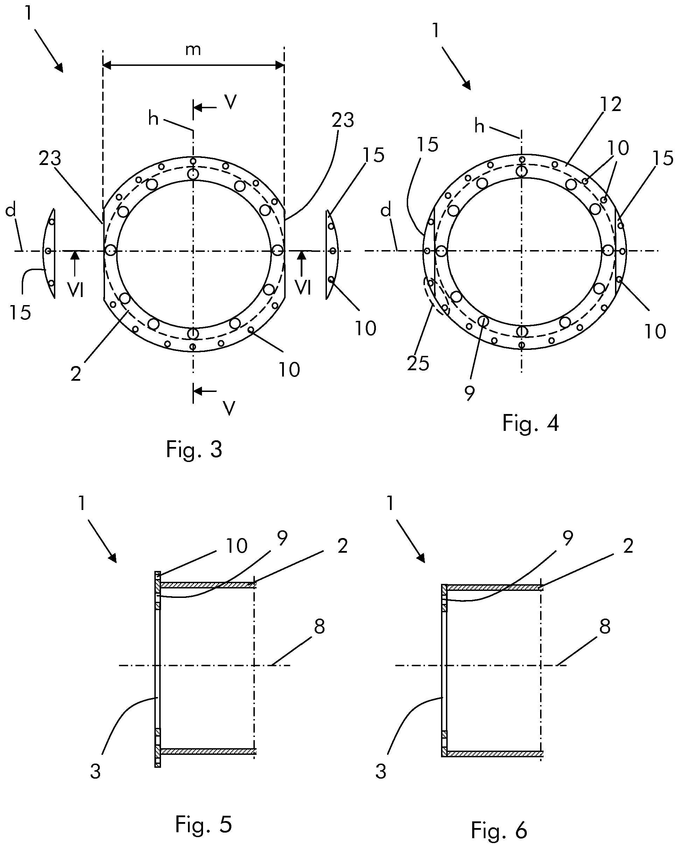

The flange 3 protrudes from the mantel 2. As shown in figure 4, a part of the flange 3 protrudes toward the longitudinal axis 8 of the casing 1; this part can have venting apertures 9. In addition, a part of the flange 3 protrudes in opposite direction to the longitudinal axis 8; this part has holes or seats 10 for the bolts 4.

The flange 3 exceeds the mantel size m in the given direction d.

The flange 3 has a fixed part 12 connected to the mantel 2 that does not exceed the mantel size m in the given direction d; this fixed part 12 has seats 14.

In addition, the flange 3 has inserts 15 connected to the seats 14. The inserts 15 at least partly exceed the mantel size m in the given direction d.

The inserts 15 also have the holes or seats 10 for the bolts 4.

The inserts 15 are removably connected to the seat 14 via removable connecting elements such as, for example, pins 17 and/or screws 18. Preferably the seat 14 has holes or seats 19 for the removable connecting elements.

The seats 14 are preferably recessed seats.

The inserts 15 have a flat part 20 that rests on the seat 14, and a curved part 21 that defines a part of the flange exceeding the mantel size m in the given direction d.

For example, the fixed part 12 has a flat surface 23 and the seats 14 are indented in the flat surface 23.

In the example shown, the mantel 2 has a cylindrical shape and the flange 3 has an annular shape and protrudes from the ends of the mantel 2. A casing like the one described is a casing of an electric generator.

The casing can be assembled as described in the following.

When the casing 1 is transported, the inserts 15 are not connected to the seats 14; this way the casing size in the given direction d (for example the maximum width) is the mantel size m (i.e. the mantel width). Thus the mantel 2 can have the largest size possible, while at the same time it has protruding flanges 3 and complies with the required maximum casing size.

After transport the inserts 15 are connected to the seats 14.

The inserts 15 have the holes or seats 10 that are preferably aligned to and also have the same distance between each other as the holes or seats 10 of the fixed part 12. In addition, also the holes or seats 12 of the fixed part 12 that face the holes of seats 12 of the insert 15 at the zones 25 are aligned and have the same distance between them as the other holes or seats 10; this guarantees a correct connection of the flange 2 to the flanges 5.

The present disclosure also refers to a method for transporting the casing 1 of an electric generator according to claim 7.

The method includes:
providing the flange 3 with a fixed part 12 connected to the mantel 2 that does not exceed the mantel size m in the given direction d, the fixed parts 12 having seats 14,
providing inserts 15 connectable to the seats 14,
transporting the casing 1 with the inserts 15 disconnected from the seats 14, then
connecting the inserts 15 to the seats 14; the inserts 15 at least partly exceed the mantel size m in the given direction d when they are connected to the seats.

The inserts 15 are removably connected to the seats 14.

In practice the materials used and the dimensions can be chosen at will according to requirements and to the state of the art.

### REFERENCE NUMBERS

- 1: casing
- 2: mantel
- 3: flange
- 4: bolts
- 5: flange
- 6: end casing
- 8: longitudinal axis
- 9: venting apertures
- 10: holes or seats
- 12: fixed part
- 14: seat
- 15: insert
- 17: pins
- 18: screws
- 19: hole or seat
- 20: flat part
- 21: curved part
- 23: flat surface
- 25: zone
- d: given direction
- h: height
- m: mantel size
- w: allowed maximum size

## Claims

1. A casing (1) of an electric generator having a mantel (2) and at least a flange (3) with an annular shape, the mantel (2) having a mantel size (m) over a given direction (d),
the flange (3) protruding from the mantel (2) and exceeding the mantel size (m) in the given direction (d), wherein the flange (3) has:
at least a fixed part (12) connected to the mantel (2) that does not exceed the mantel size (m) in the given direction (d), which is the direction of the width of the casing (1),
the at least a fixed part (12) having two seats (14), two inserts (15) removably connected to a seat (14) each, the two inserts (15) at least partly exceeding the mantel size (m) in the given direction (d), when the two inserts (15) are not connected to the two seats (14), the casing size in the given direction (d) is the mantel size (m).

2. The casing (1) according to claim 1, **characterised in that** the removable connection includes at least a removable connecting element (17, 18), and **in that** the seat (14) has at least a hole for the at least a removable connecting element (17, 18).

3. The casing (1) according to claim 1, **characterised in that** the seat (14) is a recessed seat.

4. The casing (1) according to claim 1, **characterised in that** the insert (15) has:
a flat part (20) that rests on the seat (14), and
a curved part (21) that defines a part of the flange (3) exceeding the mantel size (m) in the given direction (d).

5. The casing (1) according to claim 1, **characterised in that** the fixed part (12) has a flat surface (23), the seat (14) being indented at the flat surface (23).

6. The casing (1) according to claim 1, **characterised in that** the mantel (2) has a cylindrical shape, and **in that** the at least a flange (3) protrudes from at least an end of the mantel (2).

7. A method for transporting a casing (1) of an electric generator having a mantel (2) and at least a flange (3) with an annular shape,
the mantel (2) having a mantel size (m) over a given direction (d),
the flange (3) protruding from the mantel (2) and exceeding the mantel size (m) in the given direction (d), comprising the steps providing the flange (3) with:
at least a fixed part (12) connected to the mantel (2) that does not exceed the mantel size (m) in the given direction (d), which is the direction of the width of the casing (1),
the at least a fixed part (12) having two seats (14), providing two inserts (15) removably connectable to the two seats (14) each,
transporting the casing (1) with the two inserts (15) disconnected from the two seats (14), then connecting the inserts (15) to the seats (14), the inserts (15) at least partly exceeding the mantel size (m) in the given direction (d).

## Patentansprüche

1. Ein Gehäuse (1) eines Elektrogenerators, das eine Einfassung (2) und mindestens einen Flansch (3) mit einer Ringform aufweist, wobei die Einfassung (2) in einer gegebenen Richtung (d) eine Einfassungsgröße (m) aufweist,
wobei der Flansch (3) von der Einfassung (2) vorsteht und die Einfassungsgröße (m) in der gegebenen Richtung (d) überschreitet,
wobei der Flansch (3) aufweist:
mindestens eine feststehende Komponente (12), die mit der Einfassung (2) verbunden ist, die die Einfassungsgröße (m) in der gegebenen Richtung (d), die die Richtung der Breite des Gehäuses (1) ist, nicht überschreitet,
wobei die mindestens eine feststehende Komponente (12) zwei Aufnahmen (14) aufweist,
wobei zwei Einsätze (15) jeweils mit einer Aufnahme (14) entfernbar verbunden sind, wobei die zwei Einsätze (15) die Einfassungsgröße (m) in der gegebenen Richtung (d) zumindest teilweise überschreiten, wenn die zwei Einsätze (15) nicht mit den zwei Aufnahmen (14) verbunden sind, wobei die Gehäusegröße in der gegebenen Richtung (d) die Einfassungsgröße (m) ist.

2. Das Gehäuse (1) nach Anspruch 1, **dadurch gekennzeichnet, dass** die entfernbare Verbindung mindestens ein entfernbares Verbindungselement (17, 18) enthält und dass die Aufnahme (14) mindestens ein Loch für das mindestens eine entfernbare Verbindungselement (17, 18) aufweist.

3. Das Gehäuse (1) nach Anspruch 1, **dadurch gekennzeichnet, dass** die Aufnahme (14) eine vertiefte Aufnahme ist.

4. Das Gehäuse (1) nach Anspruch 1, **dadurch gekennzeichnet, dass** der Einsatz (15) aufweist:
eine ebene Komponente (20), die auf der Aufnahme (14) ruht, und
eine gekrümmte Komponente (21), die eine Komponente des Flansches (3) definiert, die die Einfassungsgröße (m) in der gegebenen Richtung (d) überschreitet.

5. Das Gehäuse (1) nach Anspruch 1, **dadurch gekennzeichnet, dass** die feststehende Komponente (12) eine ebene Fläche (23) aufweist, wobei die Aufnahme (14) an der ebenen Fläche (23) vorgesehen ist.

6. Das Gehäuse (1) nach Anspruch 1, **dadurch gekennzeichnet, dass** die Einfassung (2) eine zylindrische Form aufweist und dass der mindestens eine Flansch (3) von mindestens einem Ende der Einfassung (2) vorsteht.

7. Ein Verfahren zum Transportieren eines Gehäuses (1) eines Elektrogenerators, das eine Einfassung (2) und mindestens einen Flansch (3) mit einer Ringform aufweist,
wobei die Einfassung (2) in einer gegebenen Richtung (d) eine Einfassungsgröße (m) aufweist,
wobei der Flansch (3) von der Einfassung (2) vorsteht und die Einfassungsgröße (m) in der gegebenen Richtung (d) überschreitet,
das die Schritte umfasst:
Bereitstellen des Flansches (3) mit:
mindestens einer feststehenden Komponente (12), die mit der Einfassung (2) verbunden ist, die die Einfassungsgröße (m) in der gegebenen Richtung (d), die die Richtung der Breite des Gehäuses (1) ist, nicht überschreitet,
wobei die mindestens eine feststehende Komponente (12) zwei Aufnahmen (14) aufweist,
Bereitstellen zweier Einsätze (15), die jeweils mit den zwei Aufnahmen (14) entfernbar verbunden sind,
Transportieren des Gehäuses (1), wobei die zwei Einsätze (15) von den zwei Aufnahmen (14) getrennt sind, daraufhin
Verbinden der Einsätze (15) mit den Aufnahmen (14), wobei die Einsätze (15) die Einfassungsgröße (m) in der gegebenen Richtung (d) zumindest teilweise überschreiten.

## Revendications

1. Boîtier (1) d'un générateur électrique présentant une enveloppe (2) et au moins une bride (3) de forme annulaire, l'enveloppe (2) ayant une dimension d'enveloppe (m) sur une direction donnée (d),
la bride (3) faisant saillie depuis l'enveloppe (2) et dépassant la dimension d'enveloppe (m) dans la direction donnée (d),
la bride (3) ayant :
au moins une partie fixe (12) connectée à l'enveloppe (2), qui ne dépasse pas la dimension d'enveloppe (m) dans la direction donnée (d), qui est la direction de la largeur du boîtier (1),
l'au moins une partie fixe (12) ayant deux sièges (14), deux inserts (15) connectés de manière amovible à un siège respectif (14), les deux inserts (15) dépassant au moins en partie la dimension d'enveloppe (m) dans la direction donnée (d), lorsque les deux inserts (15) ne sont pas connectés aux deux sièges (14), la dimension du boîtier dans la direction donnée (d) étant la dimension d'enveloppe (m).

2. Boîtier (1) selon la revendication 1, **caractérisé en ce que** la connexion amovible comporte au moins un élément de connexion amovible (17, 18), et **en ce que** le siège (14) a au moins un trou pour l'au moins un élément de connexion amovible (17, 18).

3. Boîtier (1) selon la revendication 1, **caractérisé en ce que** le siège (14) est un siège en retrait.

4. Boîtier (1) selon la revendication 1, **caractérisé en ce que** l'insert (15) a :
une partie plate (20) qui repose sur le siège (14), et une partie courbe (21) qui définit une partie de la bride (3) dépassant la dimension d'enveloppe (m) dans la direction donnée (d).

5. Boîtier (1) selon la revendication 1, **caractérisé en ce que** la partie fixe (12) a une surface plate (23), le siège (14) étant pourvu d'une indentation au niveau de la surface plate (23).

6. Boîtier (1) selon la revendication 1, **caractérisé en ce que** l'enveloppe (2) a une forme cylindrique, et **en ce que** l'au moins une bride (3) fait saillie depuis au moins une extrémité de l'enveloppe (2).

7. Procédé pour le transport d'un boîtier (1) d'un générateur électrique ayant une enveloppe (2) et au moins une bride (3) de forme annulaire, l'enveloppe (2) ayant une dimension d'enveloppe (m) sur une direction donnée (d),
la bride (3) faisant saillie depuis l'enveloppe (2) et dépassant la dimension d'enveloppe (m) dans la direction donnée (d),
comprenant les étapes consistant à :
munir la bride (3) de :
au moins une partie fixe (12) reliée à l'enveloppe (2), qui ne dépasse pas la dimension d'enveloppe (m) dans la direction donnée (d), qui est la direction de la largeur du boîtier (1),
l'au moins une partie fixe (12) ayant deux sièges (14),
fournir deux inserts (15) pouvant être connectés de manière amovible aux deux sièges (14), respectivement,
transporter le boîtier (1) avec les deux inserts (15) déconnectés des deux sièges (14), puis connecter les inserts (15) aux sièges (14), les inserts (15) dépassant au moins en partie la dimension d'enveloppe (m) dans la direction donnée (d) .
